# EUROPEAN PATENT APPLICATION

(11) **EP 3 683 755 A1**
(43) Date of publication of application: **22.07.2020**
(21) Application number: 20152285.1
(22) Date of filing: 16.01.2020
(51) Int. Cl.: G06Q 20/34

(54) **TECHNIQUES TO DYNAMICALLY CREATE VALID CREDIT CARDS**

(30) Priority: 18.01.2019 US 201916251912
(71) Applicant: Capital One Services, LLC, McLean, Virginia 22102 (US)
(72) Inventor: VUKICH, Adam, McLean, VA Virginia 22102 (US); BENKREIRA, Abdelkader M'Hamed, McLean, VA Virginia 22102 (US); EDWARDS, Joshua, McLean, VA Virginia 22102 (US)
(74) Representative: J A Kemp LLP

(57) **Abstract**

Techniques to dynamic create valid credit cards are described. An apparatus, a computer-implemented method, and a computer-readable storage medium may implement such techniques and process virtual authorization data for authorizing a credit card to access a financial account, wherein the virtual authorization data comprises a representation of the financial account; activate the credit card using the virtual authorization data, the credit card having an integrated circuit configured for secure execution of transactions against the financial account; and store the virtual authorization data onto the integrated circuit of the credit card. Other embodiments are described and claimed.

## Description

### BACKGROUND

The financial industry, ultimately, desires unlimited and unrestricted availability to financial services for its customers. These financial services, although limited by present technology, benefit the customer in a number of ways; if access were eased, the customer will enjoy even more benefits. The financial industry settled on certain physical designs, such as cards, for storing information necessary for accessing a financial service. Once the financial service becomes available to a cardholder, that cardholder's card can be used to execute transactions against the cardholder's financial account for his/her card stores enough information-including the cardholder's financial account information as well as identifying information, such as a name-for any merchant to verify the financial account. The card holder, by virtue of possession of their card, may access authorized financial services. Virtual tokens, an example alternative technology for facilitating access to the financial services, are useful but have certain limitations.

It is with respect to these and other considerations that the present improvements have been desired.

### SUMMARY

The following presents a simplified summary in order to provide a basic understanding of some novel embodiments described herein. This summary is not an extensive overview, and it is not intended to identify key/critical elements or to delineate the scope thereof. Its sole purpose is to present some concepts in a simplified form as a prelude to the more detailed description that is presented later.

Various embodiments are generally directed to techniques to dynamically create valid credit cards. Some embodiments are particularly directed to techniques to dynamically create valid credit cards for use when a customer is without access to a financial account and requires said access. In one embodiment, for example, an apparatus includes a processing circuit and logic stored in computer memory and executed on the processing circuit. The logic is operative to cause the processing circuit to: an apparatus may comprise process virtual authorization data for authorizing a credit card to access a financial account, wherein the virtual authorization data comprises a representation of the financial account. The logic is further operative to activate the credit card using the virtual authorization data. The credit card has an integrated circuit configured for secure execution of transactions against the financial account. The logic is further operative to store the virtual authorization data onto the integrated circuit of the credit card. Other embodiments are described and claimed.

To the accomplishment of the foregoing and related ends, certain illustrative aspects are described herein in connection with the following description and the annexed drawings. These aspects are indicative of the various ways in which the principles disclosed herein can be practiced and all aspects and equivalents thereof are intended to be within the scope of the claimed subject matter. Other advantages and novel features will become apparent from the following detailed description when considered in conjunction with the drawings.

### BRIEF DESCRIPTION OF THE DRAWINGS

**FIG. 1** illustrates an embodiment of a system to dynamically create valid credit cards.
**FIG. 2** illustrates an embodiment of an operating environment for the system of FIG. 1.
**FIG. 3** illustrates an embodiment of a credit card for the system of FIG. 1.
**FIG. 4** illustrates an embodiment of a logic flow for the system of FIG. 1.
**FIG. 5** illustrates an embodiment of a second logic flow for the system of FIG. 1.
**FIG. 6** illustrates an embodiment of a computing architecture.
**FIG. 7** illustrates an embodiment of a communications architecture.

### DETAILED DESCRIPTION

Various embodiments are directed to dynamically creating valid credit cards for customer use. As described herein, physical cards and virtual tokens-conventional technologies for facilitating access to financial services-are alternative mechanisms for obtaining access to the customer's financial account but each has drawbacks. Physical cards, having printed financial account information and identifying information, open the cardholder to several risks. Even if the physical card could not be surreptitiously obtained, that printed information could be copied and misappropriated by fraudsters. Online commercial purchases, for example, where the fraudster does not have to be present could be made using such information. Virtual Credit Cards (VCC)) are restricted to online use and cannot be used at any brick-and-mortar establishment.

Virtual tokens and tokenization in general protects the customer's sensitive credit card information from misappropriation while executing the customer's electronic transactions. Because the customer's financial institution recognizes a virtual token as representing the customer's financial account, the customer's sensitive credit card information does not need to be disclosed to any third-party-unlike physical cards. Virtual tokens are only usable in a digital format, preventing such tokens to be used at most brick-and-mortar establishments without, for example, some type of powered electronic device running a suitable application. Mobile applications (e.g., a mobile payment applications) and e-commerce properties also utilize virtual tokens to secure the customer's electronic transactions. Even if the virtual token were copied, the virtual token would be useless to the copier for fraudulent purposes because the virtual token is limited to a one-time use.

Any credit card produced by the present disclosure improves upon such technologies and other technologies in the following ways. An example credit card of the present disclosure is a dynamic version of a static debit/credit card that, when used for both online or onsite purchases, can reduce or eliminate the likelihood of credit card fraud. Some embodiments, using tokenization, provide dynamic credit cards that do not disclose and/or store credit card information but are still viable for commercial use. For instance, an exemplary dynamic credit card neither stores nor displays the customer's payment account number (PAN) anywhere but does store a virtual token to facilitate execution of electronic transactions against that customer's financial account.

Furthermore, a dynamic credit card can be configured and reconfigured for the customer's financial account and/or another financial account, imposing a variety of parameters restricting usage of the dynamic credit card. Anyone gaining possession of the dynamic credit card is limited to those restrictions, effectively preventing fraud by inhibiting certain uses. Regulating the dynamic credit card's "usefulness" or "shelf-life" allows the cardholder customer to control their risk when possessing the dynamic credit card, especially, in public. While some embodiments may employ the same printed information (e.g., credit card number, security code, address, and/or expiration date) for the dynamic credit card and the static credit card, the dynamic credit card of the present disclosure employs virtual authorization data to facilitate execution of wireless electronic transactions (e.g., via point-of-sale terminals) and to prevent misuse by hackers and fraudsters (e.g., by way of tokenization). Combining features as described above enhances conventional credit card technologies.

As a result, the embodiments can improve affordability, scalability, modularity, extendibility, or interoperability for an operator, device or network.

With general reference to notations and nomenclature used herein, the detailed descriptions which follow may be presented in terms of program processes executed on a computer or network of computers. These process descriptions and representations are used by those skilled in the art to most effectively convey the substance of their work to others skilled in the art.

A process is here, and generally, conceived to be a self-consistent sequence of operations leading to the desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Reference is now made to the drawings, wherein like reference numerals are used to refer to like elements throughout. In the following description, for purposes of explanation, numerous specific details are set forth in order to provide a thorough understanding thereof. It may be evident, however, that the novel embodiments can be practiced without these specific details. In other instances, well-known structures and devices are shown in block diagram form in order to facilitate a description thereof. The intention is to cover all modifications, equivalents, and alternatives consistent with the claimed subject matter.

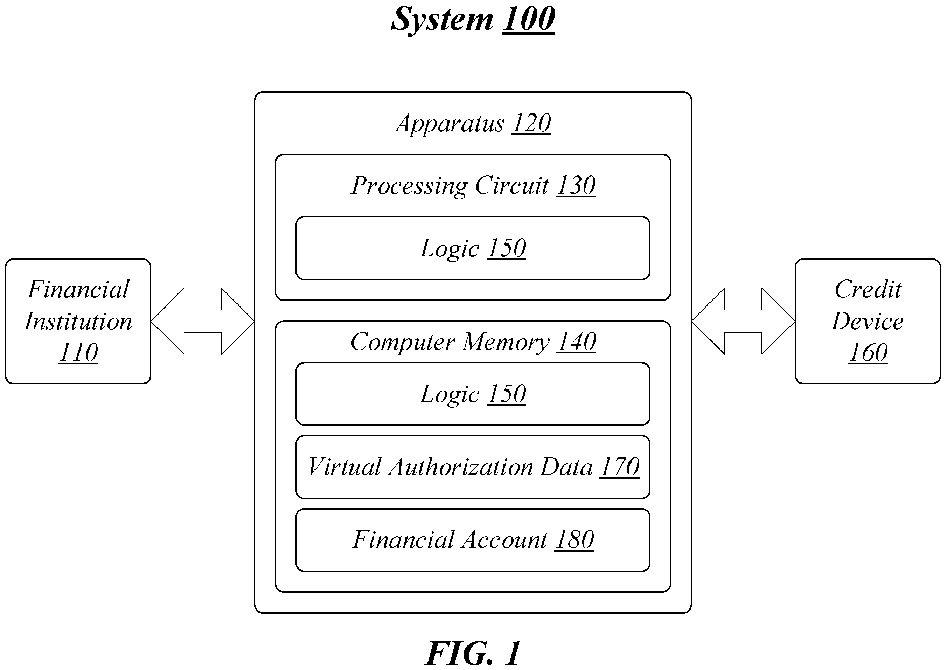

**FIG. 1** illustrates a block diagram for a system 100. In one embodiment, the system 100 may be a computer-implemented system comprising computerized electronic devices of which one set of devices operate a financial institution 110 and another set of devices comprise an apparatus 120. The financial institution 110 in FIG.1 represents an enterprise computer system running a combination of hardware and software to provide a number of financial services for any number of customers. Examples of the financial institution 110 may provide a banking service (e.g., as an investment or commercial bank) or a payment service (e.g., as a credit card issuer). As described herein, some customers utilize computerized devices (e.g., mobile phones) to access these services and such access is facilitated by an application, such as a mobile application, running on the computerized devices. It is appreciated that access to the financial institution 110 may be provided in a number of ways without the application; instead, the financial institution 110 operates an application programming interface (API) through which a third-party application (e.g., a mobile application for a brick-and-mortar establishment) may access the services of the financial institution 110.

As illustrated in FIG. 1, the apparatus 120 includes a processing circuit 130 comprising logic circuitry and computer memory 140 comprising a memory unit configuration. As described herein, logic 150 is stored in the computer memory 140 and executed in the processing circuit such that the logic 150 is operative to implement techniques to dynamically create valid credit cards, such as a credit card 160 having integrated circuit embedded within, from any suitable substrate as a workpiece. The credit card 160 may be any payment card in compliance with industry best practices including a Payment Card Industry (PCI) Data Security Standard and International Standard ISO/IEC 7810 (which defines physical characteristics for identification cards). There are acceptable alternative credit card designs and alternative payment mechanisms according to these standards. It is appreciated that the present disclosure does not exclude, from operating as a dynamic credit card as describe herein, any payment card not in compliance with these standards.

In one embodiment, the logic 150 is operative to cause the processing circuit 130 to process virtual authorization data 170 for authorizing the credit card 160 to access a financial account 180. The virtual authorization data 170, in general, refers to various representative datasets of the financial account 180 of which at least one dataset is used by the logic 150 to activate the credit card 160 for use in facilitating execution of electronic transactions at receiver devices (e.g., point-of-sale terminals). A Primary Account Number (PAN) (or payment card number) is one example of the virtual authorization data 170; it is appreciated that other examples of the virtual authorization data 170 are envisioned by the present disclosure. The credit card 160 is configured for secure execution of electronic transactions against the financial account 180 when the logic 150 stores the virtual authorization data 170 onto an integrated circuit of the credit card 160. As described herein, the credit card 160 having the integrated circuit is configured to communicably couple with nearby point-of-sale terminals and the integrated circuit includes a component operative to communicate the virtual authorization data 170 to any such point-of-sale terminal when wirelessly executing a transaction.

The logic 150 may implement an application (e.g., a first party banking application) to run on a mobile phone in accordance with various embodiments described herein. With respect to that application, consider the following example where a customer of the financial institution does not have access to an active credit card. With the application running the mobile phone, the customer may use a blank credit card with a microchip as a potential credit card. The application may present a Graphical User Interface (GUI) with a selectable option to create the active credit card 160, which in this example takes form in the blank credit card. It is appreciated that the present disclosure does not intend on limiting the credit card 160 to any particular embodiment and alternatives to the blank credit card may be transformed into the active credit card 160.

Once the customer invokes the option to create the active credit card, the logic 150 for the application initiates a process to transform the blank credit card into the credit card 160; during this process, the logic 150 generates the virtual authorization data 170 to represent the customer's financial account when accessing financial services, including those offered by the financial institution 110 and other services offered by other financial institutions. One example service requiring the active credit card 160 and the virtual authorization data 170 would be commercial purchases at point-of-sale terminals. The customer desires the activation of the blank credit card as the credit card 160 in order to complete a commercial purchase with a merchant of a good and/or service.

To illustrate by way of example, the following description refers to the credit card as a concert card for use in a public music concert. The customer may not have a valid credit card or may not wish to bring their valid credit card as a precaution against muggers lurking around at the concert. To that end, the customer may invoke the logic 150 in the apparatus 120 to transform a blank card into the credit card 160 and authorize the credit card 160 for use only at the public concert. The customer may use the logic 150 to restrict the credit card 160 to a time period spanning the public concert, to merchants operating at the public concert, and/or to a geographic area (defined by GPS coordinates) surrounding the public concert. There are additional restrictions that may be set for the credit card 160.

The virtual authorization data 170 enables the creation of the credit card 160 with or without any restrictions. The financial institution 110 provides the virtual authorization data 170 (or, alternatively, a computer program for generating the virtual authorization data 170) to the apparatus 120. It is appreciated that the manner in which the virtual authorization data 170 (or the computer program) is provided can vary. In some embodiments, the financial institution 110 generates the virtual authorization data 170 and, via a secure communication channel, communicates the virtual authorization data 170 to the logic 150 running within the apparatus 120. Alternatively, the logic 150 executes the computer program provided by the financial institution 110 to generate the virtual authorization data 170.

When valid virtual authorization data 170 is generated, the logic 150 must secure and prepare that data for transmission to a microchip embedded within a blank card or another substrate. As explained herein, the microchip includes one or more integrated circuits implementing Near Field Communication (NFC) technology for communicating data, in general, and for receiving the virtual authorization data 170, in particular. The logic 150 may configure the virtual authorization data 170 to be readable from a computerized electronic device via the microchip. The logic 150 may rearrange the virtual authorization data 170 into a format that is compatible with the NFC technology such that the microchip can read the virtual authorization data 170 from the apparatus 120. Once the virtual authorization data 170 is communicated to and written into the microchip, the blank card becomes an active dynamic credit card available for use in executing electronic transactions against the financial account being represented by the virtual authorization data 170. As an example, the microchip can be used at a point of sale (POS) terminal in operation at a retailer to complete a purchase.

Near Field Communication (NFC) technology is a standard for wireless data transmissions and whose specifications the apparatus 120 must adhere to in order to communicate with the credit card 160. This means that devices must adhere to certain specifications in order to communicate with each other properly. The NFC technology operating in the apparatus 120 currently has distinct modes of operation of which two include a peer-to-peer mode and a read/write mode. The peer-to-peer mode allows two NFC-enabled devices, such as the apparatus 120 and the credit card 160, to exchange various pieces of information, such as the virtual authorization data 170, between each other. In this mode, both devices switch between active when sending data and passive when receiving. The read/write mode, on the other hand, is a one-way data transmission where one (active) device, such as the credit card 160, links up with another device, such as the apparatus 120, in order to read information, such as the virtual authorization data 170, from that device.

One additional mode, a program mode, involves a computer program to run as directed by an NFC component of the microchip of the credit card 160. The computer program stores information about the financial account 180 and/or the credit card 160 into the microchip. The computer program may store sensitive information, such as an account number, an expiration date, a cardholder name/address, card verification value/code (e.g., CVV, CVV2, etc.), and/or the like. As described herein, once the computer program reads the virtual authorization data 170 directly from the apparatus 120, the credit card 160 becomes activated and ready for use. In one embodiment, the running computer program persists the virtual authorization data 170 in the credit card 160 to prevent tampering and to limit usage of the credit card 160. The credit card 160 cannot be re-activated after the initial activation expires.

As an alternative to NFC technology, the credit card 160 prior to activation may be a pre-made credit card with printed information. It is appreciated that any information may include the printed information, such as a cardholder name, a credit card number, and an expiration date. In one embodiment, the credit card 160 includes a magnetic stripe with encoded information, such as card verification value/code. The encoded information may further include the virtual authorization data 170. When the credit card 160 is coupled to the apparatus 120, the virtual authorization data 170 is encoded into the magnetic stripe. For example, the apparatus 120 may be an ATM (Automated Teller Machine); by inserting the credit card 160 into a card reader, the apparatus 120 may store the virtual authorization data 170 as a pattern of positive and negative magnetic stripe fields having separate tracks for storing data. When the credit card 160 is later used at a point-of-sale (POS) terminal, the pattern is decoded and the decoded pattern is translated into a usable format along with a credit card number, a credit cardholder name, and an expiration date.

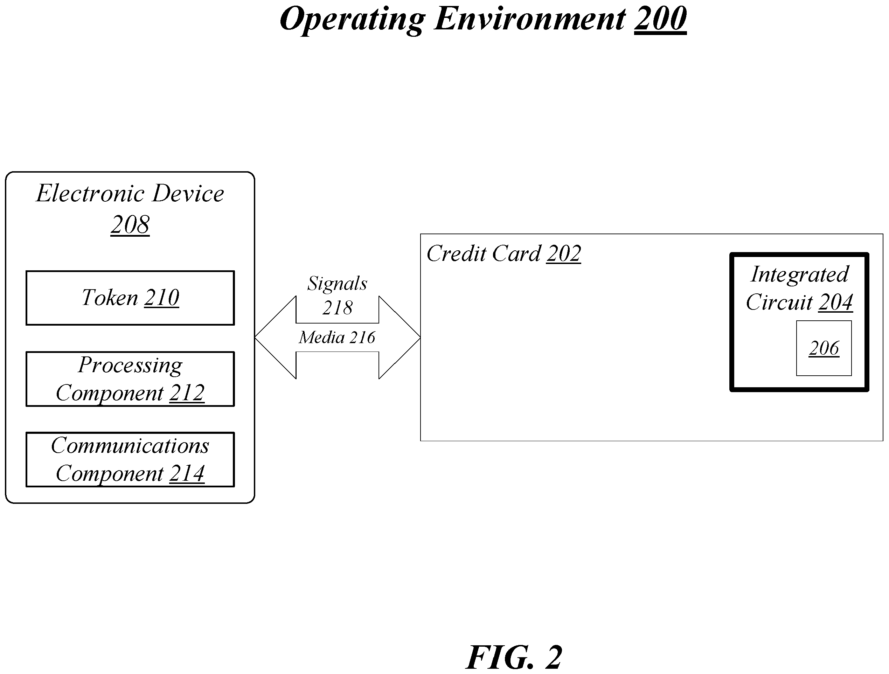

**FIG. 2** illustrates an embodiment of an operating environment 200 for the system 100. The operating environment 200 includes a credit card 202, which may be an example of the credit card 160 of FIG. 1, and an electronic device 208, which may be an example of the apparatus 120 of FIG. 1. As shown in FIG. 2, the credit card 202 may include an integrated circuit 204 with a communications component 206 for communicating data with a device, such as the electronic device 208. In one embodiment, the communications component 206 may receive a token 210 (e.g., the virtual authorization data 170 of FIG. 1) from the electronic device 208.

The electronic device 208 may comprise any computerized device capable of receiving, processing, and sending information for the system 100. Examples of an electronic device may include without limitation an ultra-mobile device, a mobile device, a personal digital assistant (PDA), a mobile computing device, a smart phone, a telephone, a digital telephone, a cellular telephone, ebook readers, a handset, a one-way pager, a two-way pager, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, game devices, television, digital television, set top box, wireless access point, base station, subscriber station, mobile subscriber center, radio network controller, router, hub, gateway, bridge, switch, machine, or combination thereof. The embodiments are not limited in this context.

The electronic device 208 may execute processing operations or logic for the system 100 using a processing component 212 (e.g., the processing circuit 130 of FIG. 1). The processing component may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), Application-specific Standard Products (ASSPs), System-on-a-chip systems (SOCs), Complex Programmable Logic Devices (CPLDs), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, processes, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

The electronic device 208 may execute communications operations or logic for the system 100 using a communications component 214. The communications component 214 may implement any well-known communications techniques and protocols, such as techniques suitable for use with packet-switched networks (e.g., public networks such as the Internet, private networks such as an enterprise intranet, and so forth), circuit-switched networks (e.g., the public switched telephone network), or a combination of packet-switched networks and circuit-switched networks (with suitable gateways and translators). The communications component 214 may include various types of standard communication elements, such as one or more communications interfaces, network interfaces, network interface cards (NIC), radios, wireless transmitters/receivers (transceivers), wired and/or wireless communication media, physical connectors, and so forth. By way of example, and not limitation, communication media 216 include wired communications media and wireless communications media. Examples of wired communications media may include a wire, cable, metal leads, printed circuit boards (PCB), backplanes, switch fabrics, semiconductor material, twisted-pair wire, co-axial cable, fiber optics, a propagated signal, and so forth. Examples of wireless communications media may include acoustic, radio-frequency (RF) spectrum, infrared and other wireless media. The device 208 may communicate with the credit card 202 and other devices over a communications media using communications signals 218 via the communications component 214 and the communications component 206. As described herein, some embodiments of the device 208 and the credit card 202 implement Near Field Communication (NFC) technology to communicate with each other.

One exemplary implementation of the device 208 may configure the token 210 to be in a format readable by the integrated circuit 204 of the credit card 202. The communications component 206 and the communications component 214 may be compatible and/or agree on a protocol for exchanging data. In one embodiment, the communications component 206 reads the token 210 (e.g., via the signals) and stores the token 210 into a memory portion of the integrated circuit 204. The transmission of the token 210 to the integrated circuit 204 activates the credit card 202 for use in executing electronic transactions against a financial account.

In some embodiments, the activation of the credit card 202 imposes one or more conditions on using the credit card 202, such as by limiting usage to a time period, a dollar amount, a specific transaction, a group of authorized merchants, a geographic area, or any combination of the above conditions. The communications component 206 transmits (e.g., via NFC technology) to the communications component 214 information identifying each and every condition to impose. As an example, the communications component 206 transmits merchant codes indicating the group of authorized merchants for use of the credit card 202 and/or a numeric value indicating a dollar amount limit for the credit card 202. As another example, the communications component 214 transmits GPS coordinates indicating the acceptable geographic area.

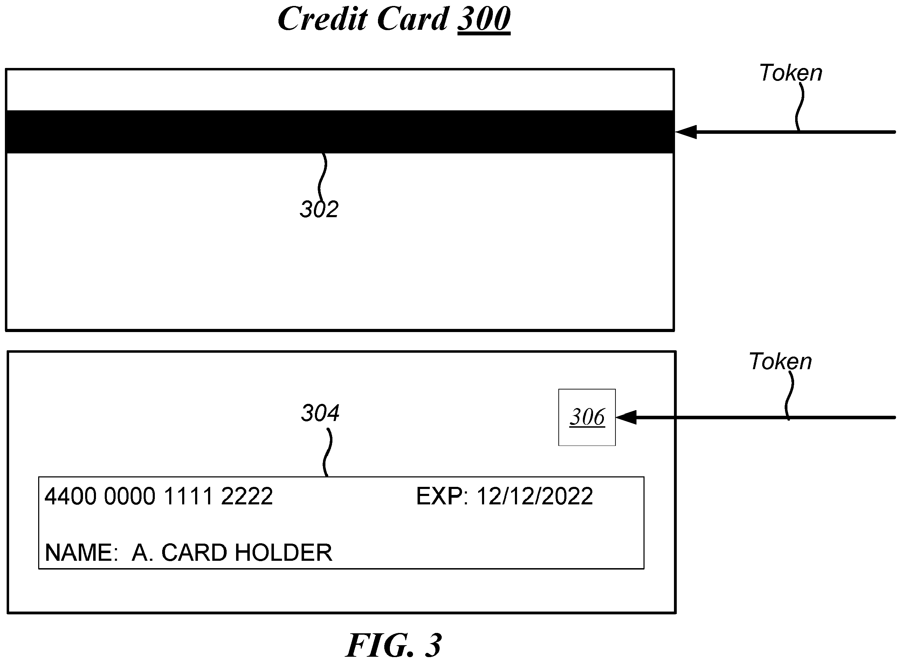

**FIG. 3** illustrates an embodiment of a type of a credit card 300 for the system 100. As shown in FIG. 3, the credit card 300 is a physical embodiment of the credit card 202 of FIG. 2 and the ornamental features of the credit card 300 are known in credit card design. The credit card 300 may be configured to creation by an ATM operating as the apparatus 120 of FIG. 1.

The credit card 300 includes a magnetic stripe 302, printed information 304, and a Near Field Communications (NFC)-enabled microchip 306. Some embodiments of the NFC-enabled microchip 306, which may be known as a smart chip, possibly include an RFID (radio frequency ID) component. The NFC-enabled microchip 306 is an exemplary integrated circuit for the credit card 300 and is configured to facilitate the execution of electronic transactions against a financial account, especially at a point-of-sale terminal. The printed information 304 facilitates these transactions by providing cardholder information that might be used when a transaction fails. It is appreciated that in some embodiments, the printed information 304 is not present on the credit card 300. Some embodiments do not require the printed information to execute any electronic transaction against the financial account; as described herein, the NFC-enabled microchip 306 includes data storing the same printed information 304 in digital form.

In some embodiments, the cardholder information is embedded in either the magnetic stripe 302 or the NFC-enabled microchip 306 such that the printed information 304 is not needed in the credit card 300. The printed information 304 may be present, nonetheless, to be accessible when needed. The credit card 300, alternatively, may include only the NFC-enabled microchip 306; the printed information 304 and/or the magnetic stripe 302 may not be needed to execute electronic transactions when the NFC-enabled microchip 306 is present. In other alternative embodiments, the credit card 300 may not include the NFC-enabled microchip 306 and may include only the magnetic stripe 302 for use in executing electronic transactions.

The printed information 304 includes a credit card number, a cardholder name, and an expiration date of the credit card 300. The credit card 300 may be provided to the user with the printed information 304 such that when the credit card 300 is activated, the printed information 304 allows the credit card 300 to be identified. In this manner, the credit card 300 is ready for use once a virtual token is written to the magnetic stripe 302 and/or the NFC-enabled microchip 306.

As demonstrated herein, the virtual token (or simply token) representing the financial account is stored on the NFC-enabled microchip 306 to activate the credit card 300 for use. In addition to or as an alternative of the NFC-enabled microchip 306, the same token or a different token is encoded into the magnetic stripe 302. The token is an example of virtual authorization data and is operative to couple or link the financial account to the physical credit card 300, conferring authority over the financial account to a user of the credit card 300.

The credit card 300's authority may be limited in certain respects, such as with respect to a period of time. Once the period of time elapses, the credit card 300 is no longer valid. Usage of the credit card 300 may be limited to a particular merchant or a group of merchants. A financial institution holding the financial account may accept transactions with the credit card 300 only if a merchant code matches one of the merchants in the accepted group of merchants. In some embodiments, the point-of-sale terminal independently determines that the merchant code of a pending transaction is not a member of the accepted group of merchants. Similarly, the credit card 300 may be limited to a particular geographic area defined by GPS coordinates and if the user is at a point with GPS coordinates outside of the particular geographic area and attempts a transaction with the credit card 300, the financial institution declines the transaction. The credit card 300 may be further limited to a specific dollar amount representing the extent of credit allotted by the financial institution.

Included herein is a set of flow charts representative of exemplary methodologies for performing novel aspects of the disclosed architecture. While, for purposes of simplicity of explanation, the one or more methodologies shown herein, for example, in the form of a flow chart or flow diagram, are shown and described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

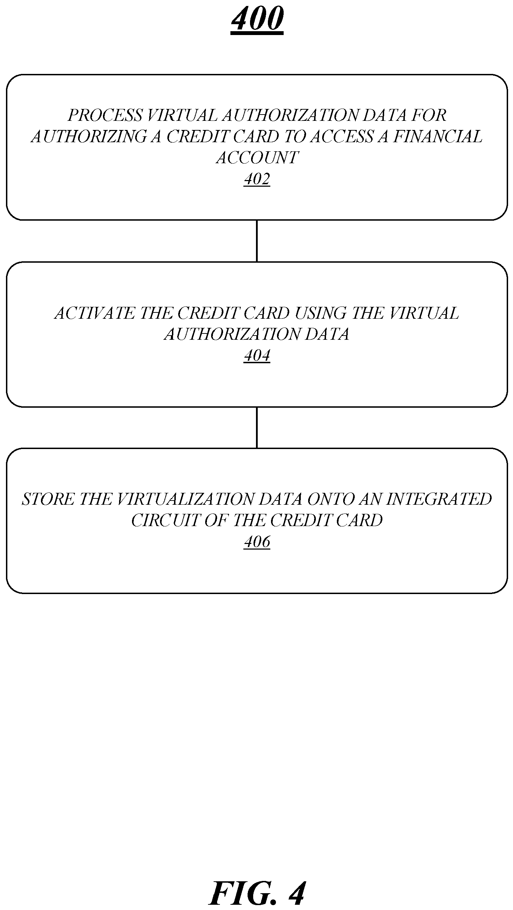

**FIG. 4** illustrates one embodiment of a logic flow 400. The logic flow 400 may be representative of some or all of the operations executed by one or more embodiments described herein.

In the illustrated embodiment shown in FIG. 4, the logic flow 400 processes virtual authorization data for authorizing a credit card to access a financial account at block 402. The virtual authorization data may store a numeric value (e.g., a token) representing the financial account and any device having the virtual authorization data has authority over the financial account. In some embodiments, the virtual authorization data includes a value that is generated via a tokenization process of protecting sensitive data associated with the financial account. By replacing the sensitive data in this process with an algorithmically generated number called a token, the sensitive data cannot be ascertained and misused, preventing fraud and misappropriation of the financial account. As an example, the financial account's primary account number (PAN) is replaced with a series of randomly-generated numbers for the value stored in the virtual authorization data. The logic flow 400 may communicate the virtual authorization data to the credit card for storage on the credit card's integrated circuit.

The logic flow 400 may activate the credit card using the virtual authorization data at block 404. For example, the logic flow 400 may transform a workpiece, such as a blank card having a compatible microchip, into a valid credit card. The logic flow 400 may activate the credit card with certain restrictions regarding usage, such as an expiration date/time, a dollar amount limit, a specific transaction, a group of authorized merchants, an authorized geographic area, or any combination of the above restrictions.

The logic flow 400 may store the virtual authorization data onto an integrated circuit at block 406. For example, to complete the activation in block 404, the logic flow 400 communicates the virtual authorization data to the credit card for storage in a portion of the credit card's integrated circuit. The logic flow 400 may write the virtual authorization data into a memory portion of the integrated circuit. When needed to complete an electronic transaction, a NFC component reads the virtual authorization data from the memory portion (e.g., semiconductor memory) and communicates the virtual authorization data to a point-of-sale (POS) terminal. As an alternative, the logic flow 400 may write the virtual authorization data into another portion (e.g., programmable logic) of the integrated circuit. The embodiments are not limited to this example.

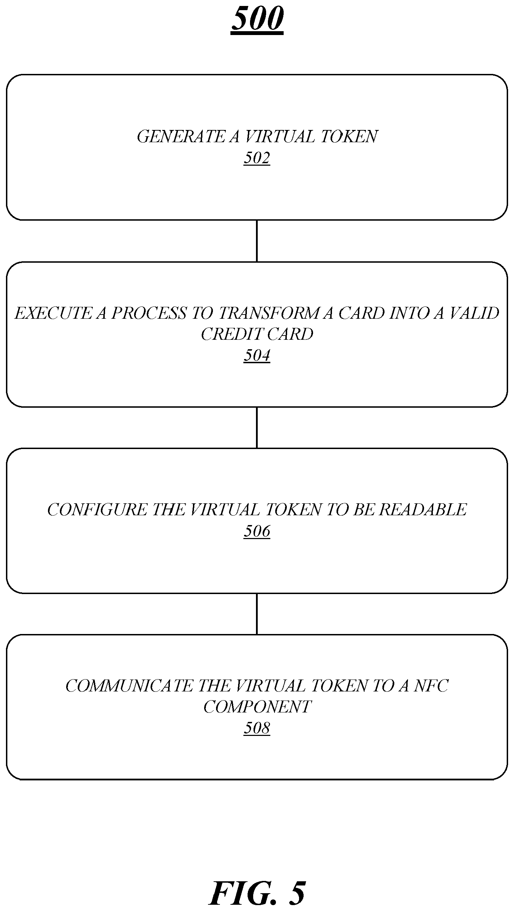

**FIG. 5** illustrates one embodiment of a logic flow 500. The logic flow 500 may be representative of some or all of the operations executed by one or more embodiments described herein.

As demonstrated herein, an electronic device, such as a mobile phone, may execute the logic flow 500 as part of a mobile application. In the illustrated embodiment shown in FIG. 5, the logic flow 500 generates a virtual token at block 502. For example, the logic flow 500 may generate the virtual token using logic provided by a financial institution or may request that the financial institution generate and then, communicate the virtual token to the electronic device. The logic flow 500 stores the virtual token and in the following steps, communicates the virtual token to an integrated circuit within any suitable article, such as a credit card.

The logic flow 500 may execute a process to transform a card into a valid dynamic credit card at block 504. In some embodiments, the logic flow 500 initiates this process in response to a control directive, such as a tactile interaction or a gesture command submitted via the mobile application running on the mobile phone. To illustrate, a person operating their mobile phone may desire a credit card for a spontaneous commercial use and, via the mobile application, navigates a menu and activates a selectable option for the process. The logic executed for the mobile application commences the process to transforms the blank credit card into the valid credit card.

As described herein, an exemplary article of the present disclosure may be a card having a microchip embedded within and communications capabilities (e.g., via a NFC component which may or may not be part of the integrated microchip). While the card (or dynamic credit card once validated) in rectangular form may be suitable for the logic flow 500, the present disclosure does not impose any restrictions on the card being transformed; any article of any reasonable shape and size would be appropriate as the dynamic credit card. For example, the logic flow 500 may commence the process by instructing the mobile application to request, from the financial institution, the virtual token for use in creating a valid credit card. Once the mobile application receives the virtual token, the logic flow 500 configures the virtual token for transmission to the integrated circuit.

The logic flow 500 may configure the virtual token to be readable from an electronic device at block 506. The logic flow 500 may generate virtual authorization data to store the virtual token such that the virtual token may be accessed from the integrated circuit of the dynamic credit card. For example, the logic flow 500 may transform the virtual token into a format that is readable by a communications component within the integrated circuit. The communications component may implement an NFC protocol or any other protocol that enables communications with the mobile application running on the electronic device. The communications component may read the virtual authorization data, recognize the readable format of the virtual authorization data, and extract the virtual token. Alternatively, the virtual authorization data may be structured data with a number of items (e.g., data items) stored within and the virtual token may be stored in a specific location as one of those items.

The logic flow 500 may communicate the virtual token to a NFC component and write the virtual token into a microchip at block 508. As an example, the logic flow 500 may generate a data packet with the virtual token as a payload. The logic flow 500, via the NFC component, may communicably couple the card to the electronic device such that the electronic device recognizes the card as a connected device and agrees to exchange data with the integrated circuit of the dynamic credit card. When the electronic device and the dynamic credit card exchange data, the electronic device may communicate into a surrounding area radio signals carrying the data packet with the virtual token payload. The NFC component of the card may receive the radio signals and extract the virtual token from the data packet. It is appreciated that in other embodiments, the NFC component of the card may receive the radio signals and read the virtual token where the dynamic credit card and the electronic device are not connected devices. The logic flow 500, by storing the virtual token into a unit (e.g., a logic unit) of the integrated circuit, activates the card as a valid credit card for any use except for those not permitted by the cardholder. The embodiments are not limited to this example.

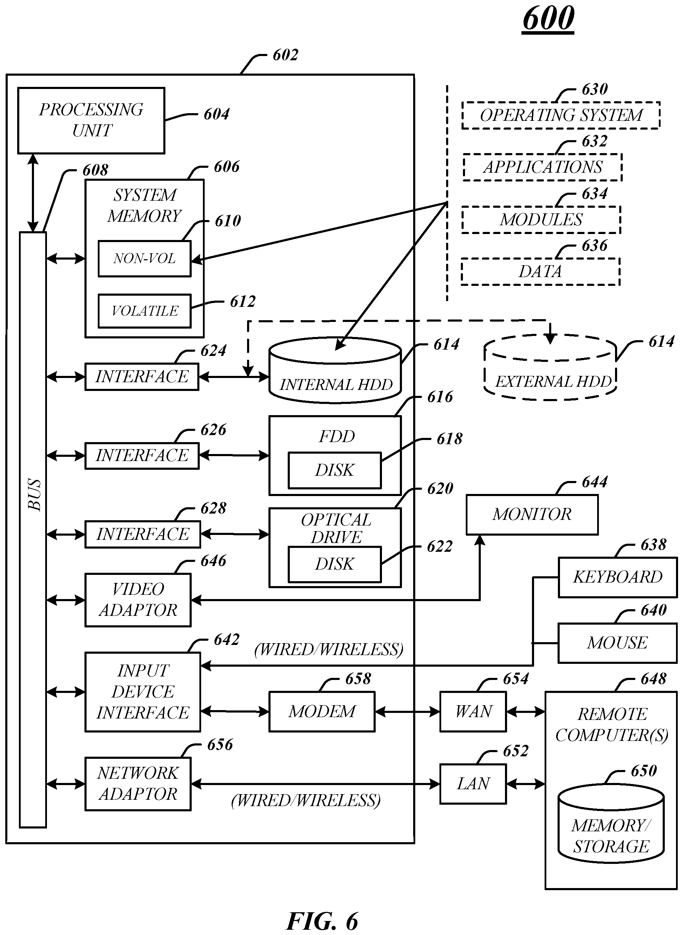

**FIG. 6** illustrates an embodiment of an exemplary computing architecture 600 suitable for implementing various embodiments as previously described. In one embodiment, the computing architecture 600 may comprise or be implemented as part of an electronic device. Examples of an electronic device may include those described with reference to FIG. 8, among others. The embodiments are not limited in this context.

As used in this application, the terms "system" and "component" are intended to refer to a computer-related entity, either hardware, a combination of hardware and software, software, or software in execution, examples of which are provided by the exemplary computing architecture 600. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 600 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 600.

As shown in FIG. 6, the computing architecture 600 comprises a processing unit 604, a system memory 606 and a system bus 608. The processing unit 604 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Itanium®, Pentium®, Xeon®, and XScale® processors; and similar processors. Dual microprocessors, multi-core processors, and other multi-processor architectures may also be employed as the processing unit 604.

The system bus 608 provides an interface for system components including, but not limited to, the system memory 606 to the processing unit 604. The system bus 608 can be any of several types of bus structure that may further interconnect to a memory bus (with or without a memory controller), a peripheral bus, and a local bus using any of a variety of commercially available bus architectures. Interface adapters may connect to the system bus 608 via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and the like.

The computing architecture 600 may comprise or implement various articles of manufacture. An article of manufacture may comprise a computer-readable storage medium to store logic. Examples of a computer-readable storage medium may include any tangible media capable of storing electronic data, including volatile memory or non-volatile memory, removable or non-removable memory, erasable or non-erasable memory, writeable or rewriteable memory, and so forth. Examples of logic may include executable computer program instructions implemented using any suitable type of code, such as source code, compiled code, interpreted code, executable code, static code, dynamic code, object-oriented code, visual code, and the like. Embodiments may also be at least partly implemented as instructions contained in or on a non-transitory computer-readable medium, which may be read and executed by one or more processors to enable performance of the operations described herein.

The system memory 606 may include various types of computer-readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information. In the illustrated embodiment shown in FIG. 6, the system memory 606 can include non-volatile memory 610 and/or volatile memory 612. A basic input/output system (BIOS) can be stored in the non-volatile memory 610.

The computer 602 may include various types of computer-readable storage media in the form of one or more lower speed memory units, including an internal (or external) hard disk drive (HDD) 614, a magnetic floppy disk drive (FDD) 616 to read from or write to a removable magnetic disk 618, and an optical disk drive 620 to read from or write to a removable optical disk 622 (e.g., a CD-ROM or DVD). The HDD 614, FDD 616 and optical disk drive 620 can be connected to the system bus 608 by a HDD interface 624, an FDD interface 626 and an optical drive interface 628, respectively. The HDD interface 624 for external drive implementations can include at least one or both of Universal Serial Bus (USB) and IEEE 1394 interface technologies.

The drives and associated computer-readable media provide volatile and/or nonvolatile storage of data, data structures, computer-executable instructions, and so forth. For example, a number of program modules can be stored in the drives and memory units 610, 612, including an operating system 630, one or more application programs 632, other program modules 634, and program data 636. In one embodiment, the one or more application programs 632, other program modules 634, and program data 636 can include, for example, the various applications and/or components of the system 100.

A user can enter commands and information into the computer 602 through one or more wire/wireless input devices, for example, a keyboard 638 and a pointing device, such as a mouse 640. Other input devices may include microphones, infra-red (IR) remote controls, radio-frequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses, and the like. These and other input devices are often connected to the processing unit 604 through an input device interface 642 that is coupled to the system bus 608, but can be connected by other interfaces such as a parallel port, IEEE 1394 serial port, a game port, a USB port, an IR interface, and so forth.

A monitor 644 or other type of display device is also connected to the system bus 608 via an interface, such as a video adaptor 646. The monitor 644 may be internal or external to the computer 602. In addition to the monitor 644, a computer typically includes other peripheral output devices, such as speakers, printers, and so forth.

The computer 602 may operate in a networked environment using logical connections via wire and/or wireless communications to one or more remote computers, such as a remote computer 648. The remote computer 648 can be a workstation, a server computer, a router, a personal computer, portable computer, microprocessor-based entertainment appliance, a peer device or other common network node, and typically includes many or all of the elements described relative to the computer 602, although, for purposes of brevity, only a memory/storage device 650 is illustrated. The logical connections depicted include wire/wireless connectivity to a local area network (LAN) 652 and/or larger networks, for example, a wide area network (WAN) 654. Such LAN and WAN networking environments are commonplace in offices and companies, and facilitate enterprise-wide computer networks, such as intranets, all of which may connect to a global communications network, for example, the Internet.

When used in a LAN networking environment, the computer 602 is connected to the LAN 652 through a wire and/or wireless communication network interface or adaptor 656. The adaptor 656 can facilitate wire and/or wireless communications to the LAN 652, which may also include a wireless access point disposed thereon for communicating with the wireless functionality of the adaptor 656.

When used in a WAN networking environment, the computer 602 can include a modem 658, or is connected to a communications server on the WAN 654, or has other means for establishing communications over the WAN 654, such as by way of the Internet. The modem 658, which can be internal or external and a wire and/or wireless device, connects to the system bus 608 via the input device interface 642. In a networked environment, program modules depicted relative to the computer 602, or portions thereof, can be stored in the remote memory/storage device 650. It will be appreciated that the network connections shown are exemplary and other means of establishing a communications link between the computers can be used.

The computer 602 is operable to communicate with wire and wireless devices or entities using the IEEE 802 family of standards, such as wireless devices operatively disposed in wireless communication (e.g., IEEE 802.11 over-the-air modulation techniques). This includes at least Wi-Fi (or Wireless Fidelity), WiMax, and Bluetooth™ wireless technologies, among others. Thus, the communication can be a predefined structure as with a conventional network or simply an ad hoc communication between at least two devices. Wi-Fi networks use radio technologies called IEEE 802.11x (a, b, g, n, etc.) to provide secure, reliable, fast wireless connectivity. A Wi-Fi network can be used to connect computers to each other, to the Internet, and to wire networks (which use IEEE 802.3-related media and functions).

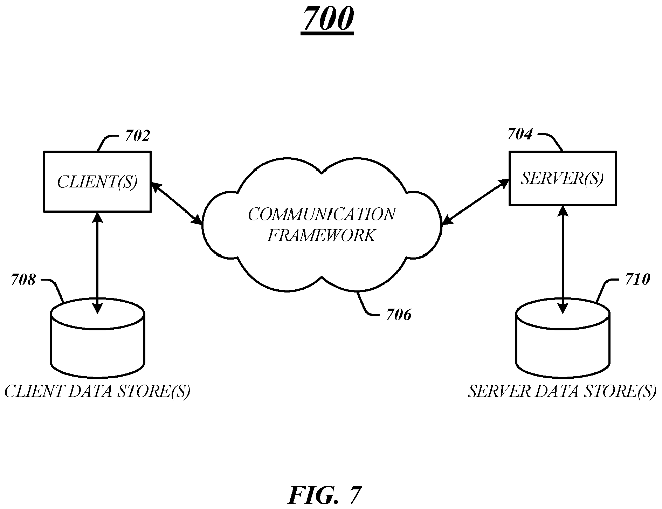

**FIG. 7** illustrates a block diagram of an exemplary communications architecture 700 suitable for implementing various embodiments as previously described. The communications architecture 700 includes various common communications elements, such as a transmitter, receiver, transceiver, radio, network interface, baseband processor, antenna, amplifiers, filters, power supplies, and so forth. The embodiments, however, are not limited to implementation by the communications architecture 700.

As shown in FIG. 7, the communications architecture 700 comprises includes one or more clients 702 and servers 704. The clients 702 may implement a client device, such as the apparatus 120 of FIG. 1 or the electronic device 208 of FIG. 2. The servers 704 may implement a server device, such as one implemented for the financial institution 110 of FIG. 1. The clients 702 and the servers 704 are operatively connected to one or more respective client data stores 708 and server data stores 710 that can be employed to store information local to the respective clients 702 and servers 704, such as cookies and/or associated contextual information.

The clients 702 and the servers 704 may communicate information between each other using a communication framework 706. The communications framework 706 may implement any well-known communications techniques and protocols. The communications framework 706 may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators).

The communications framework 706 may implement various network interfaces arranged to accept, communicate, and connect to a communications network. A network interface may be regarded as a specialized form of an input output interface. Network interfaces may employ connection protocols including without limitation direct connect, Ethernet (e.g., thick, thin, twisted pair 10/100/1000 Base T, and the like), token ring, wireless network interfaces, cellular network interfaces, IEEE 802.11a-x network interfaces, IEEE 802.16 network interfaces, IEEE 802.20 network interfaces, and the like. Further, multiple network interfaces may be used to engage with various communications network types. For example, multiple network interfaces may be employed to allow for the communication over broadcast, multicast, and unicast networks. Should processing requirements dictate a greater amount speed and capacity, distributed network controller architectures may similarly be employed to pool, load balance, and otherwise increase the communicative bandwidth required by clients 702 and the servers 704. A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Further, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims.

## Claims

1. An apparatus, comprising:
a processing circuit; and
logic stored in computer memory and executed on the processing circuit, the logic operative to cause the processing circuit to:
process virtual authorization data for authorizing a credit card to access a financial account, wherein the virtual authorization data comprises a representation of the financial account;
activate the credit card using the virtual authorization data, the credit card having an integrated circuit configured for secure execution of transactions against the financial account; and
store the virtual authorization data onto the integrated circuit of the credit card.

2. The apparatus of claim 1 further comprising logic operative to cause the processing circuit to configure the virtual authorization data to be readable by the credit card.

3. The apparatus of claim 1 or 2 further comprising logic operative to cause the processing circuit to generate a virtual token, representing the financial account, to associate the financial account with the credit card.

4. The apparatus of claim 3 further comprising logic operative to cause the processing circuit to write the virtual token into a portion of the integrated circuit.

5. The apparatus of any one of the preceding claims further comprising logic operative to cause the processing circuit to communicate the virtual authorization data to a Near Field Communication (NFC) component of the integrated circuit.

6. The apparatus of any one of the preceding claims further comprising logic operative to cause the processing circuit to authorize the credit card for at least one of a time period, a dollar amount, a specific transaction, a group of authorized merchants, or a geographic area.

7. The apparatus of any one of the preceding claims wherein the credit card comprises a magnetic stripe encoding the virtual authorization data.

8. A computer-implemented method executed on a processing circuit, comprising:
processing virtual authorization data for authorizing creation of a credit card for a financial account, wherein the virtual authorization data is to represent the financial account;
executing a process that uses the virtual authorization data to activate the credit card, the credit card having an integrated circuit configured for secure execution of transactions against the financial account; and
communicating the virtual authorization data onto the integrated circuit of the credit card.

9. The computer-implemented method of claim 8, comprising generating a virtual token to associate the financial account with the credit card and writing the virtual token into a portion of the integrated circuit.

10. The computer-implemented method of claim 8 or 9, comprising transforming the virtual authorization data into a format readable by the integrated circuit of the credit card.

11. The computer-implemented method of claim 8, 9 or 10,wherein the credit card comprises printed information identifying a credit card number, a cardholder, and an expiration date.

12. The computer-implemented method of any one of claims 8 to 11, comprising communicating the virtual authorization data to the integrated circuit comprising a Near Field Communication (NFC) component.

13. The computer-implemented method of any one of claims 8 to 12 further comprising authorizing the credit card for at least one of a time period, a dollar amount, a specific transaction, a group of authorized merchants, or a geographic area.

14. The computer-implemented method of any one of claims 8 to 13, comprising configuring the virtual authorization data for communication through a radio of a mobile phone.

15. A computer program comprising instructions that, when executed by a computer system, cause the computer system to perform a method according to any one of claims 8 to 14.
